Europäisches Patentamt

European Patent Office

Office européen des brevets

(11) Veröffentlichungsnummer: **0 120 226**
**B1**

(12) **EUROPÄISCHE PATENTSCHRIFT**

(19)

(45) Veröffentlichungstag der Patentschrift:
20.05.87

(21) Anmeldenummer: **84101052.3**

(22) Anmeldetag: **02.02.84**

(51) Int. Cl.⁴: **B 23 D 77/00**

(54) **Reibahle.**

(30) Priorität: **02.03.83 DE 3307398**

(43) Veröffentlichungstag der Anmeldung:
**03.10.84 Patentblatt 84/40**

(45) Bekanntmachung des Hinweises auf die Patenterteilung:
**20.05.87 Patentblatt 87/21**

(84) Benannte Vertragsstaaten:
**AT BE CH DE FR GB IT LI NL SE**

(56) Entgegenhaltungen:
**DE-A-2 457 505**
**DE-B-1 153 223**
**DE-B-1 752 151**
**DE-B-2 522 565**
**GB-A-1 080 155**
**US-A-2 380 517**
**US-A-2 869 405**
**US-A-3 422 706**

(73) Patentinhaber: **MAPAL Fabrik für Präzisionswerkzeuge Dr. Kress KG, Obere Bahnstrasse 13 Postfach 1520, D-7080 Aalen (DE)**

(72) Erfinder: **Der Erfinder hat auf seine Nennung verzichtet**

(74) Vertreter: **Patentanwälte Dr. Ing. Eugen Maier Dr. Ing. Eckhard Wolf, Pischekstrasse 19, D-7000 Stuttgart 1 (DE)**

## Beschreibung

Die Erfindung betrifft eine Reibahle mit am Umfang des Messerkopfes lösbar angeordneten, im wesentlichen parallel zur Messerkopfachse in prismatischen Aussparungen sich erstreckenden Führungsleisten.

Die übliche Befestigung der Führungsleisten in Aussparungen des Messerkopfes mittels einer Klemmschraube weist insofern Nachteile auf, als durch die in eine Aussparung der Führungsleiste eingesetzte Klemmschraube die von den Führungsleisten auf die Bohrungswandung ausgeübte Glättwirkung beeinträchtigt wird, da die Gefahr besteht, daß sich in der den Schraubenkopf aufnehmenden Aussparung der Führungsleiste Späne ansammeln. Da die Führungsleisten in radialer Richtung nur eine verhältnismäßig geringe Dicke aufweisen, besteht darüberhinaus die Gefahr, daß sich die Führungsleisten infolge der Querschnittsschwächung im Bereich der Klemmschraube durchbiegen, so daß auch aus diesem Grund eine einwandfreie Anlage an der Bohrungswandung nicht gewährleistet ist.

Eine Anordnung der Führungsleisten, die eine zylindrische Krümmung mit einem gegenüber der Bohrungswandung kleineren Krümmungsradius aufweisen, der Art, daß die axialen Scheitellinien der Führungsleisten auf einem vorbestimmten Flugkreis liegen, kann dadurch erreicht werden, daß die Führungsleisten in einen schwalbenschwanzförmigen Querschnitt aufweisenden Aussparungen angeordnet werden, in die sie von der Stirnseite des Messerkopfes her eingeschoben werden. Damit wäre jedoch eine notwendige exakte Fixierung der Führungsleisten in axialer Richtung nicht gewährleistet und außerdem die Gefahr verbunden, daß beim Zurückführen der Reibahle aus dem geriebenen Bohrloch die Führungsleisten aufgrund der zwischen ihnen und der Bohrungswandung vorhandenen Flächenreibung in der geriebenen Bohrung festgehalten werden.

Um dies zu vermeiden und die Führungsleisten auch in axialer Richtung zu sichern, sind gemäß der Erfindung die Führungsleisten in Aussparungen selbsthemmend angeordnet, wozu mindestens in die in Drehrichtung vordere Seitenfläche der Aussparung elastische, über die Seitenfläche überstehende Körper eingesetzt sind, die mit den Führungsleisten einen Reibungsschluß bewirken. Vorteilhafterweise sind diese elastischen Körper, in Radialebenen des Messerkopfes angeordnet. Sie weisen vorteilhafterweise eine zylindrische Gestalt auf und sind in randoffenen Bohrungen eingesetzt.

In der Zeichnung ist in schematischer Weise ein Ausführungsbeispiel der erfindungsgemäßen Reibahle dargestellt.

Es zeigen

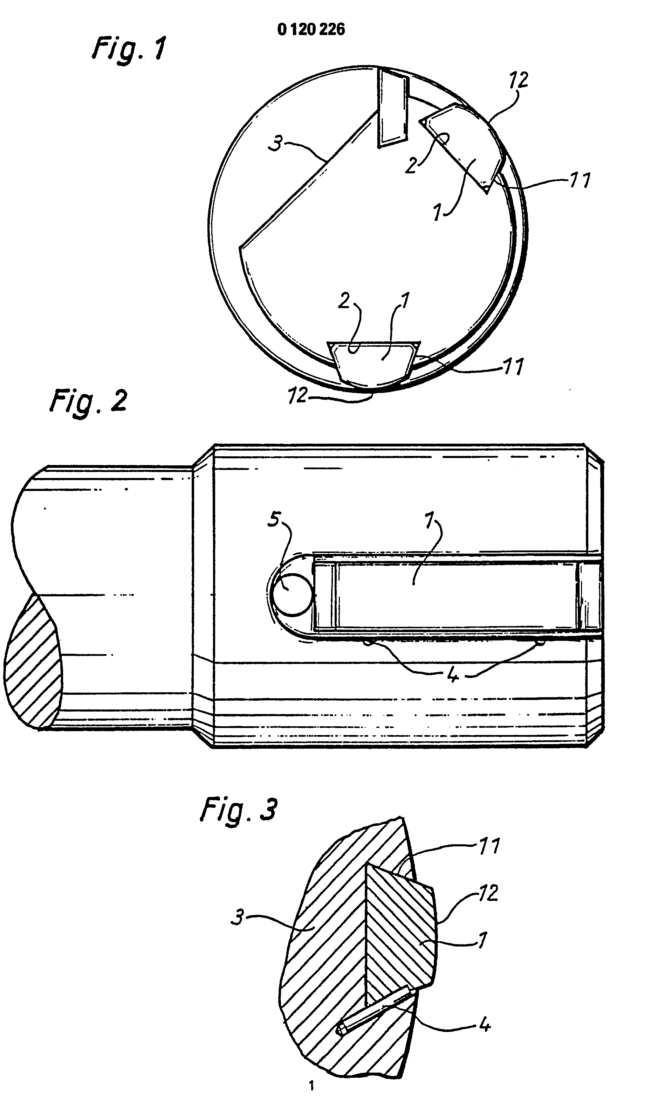

Fig. 1 eine Stirnseitenansicht des Reibahlen-Messerkopfes,

Fig. 2 eine Seitenansicht des Messerkopfes,

Fig. 3 ein Querschnitt durch eine Führungsleiste in vergrößertem Maßstab.

Am Umfang des Messerkopfes 3 einer als Einmesser-Reibahle ausgebildeten Reibahle sind zwei Führungsleisten 1 in prismatischen Aussparungen 2 eingesetzt. Die Führungsleisten 1 weisen ein im wesentlichen trapezförmiges profil mit zwei Flanken 11 und einer zylindrisch gekrümmten Außenfläche 12 auf. In die einen schwalbeschwanzförmigen Querschnitt aufweisenden Aussparungen 2 werden die Führungsleisten 1 von der Stirnseite des Messerkopfes 3 her eingesetzt und liegen mit ihrer rückseitigen Stirnfläche gegen einen Anschlag 5 an. Um die axiale Lage der Führungsleisten 1 in den Aussparungen 2 zu sichern, sind in eine Seitenfläche der Aussparungen 2 in randoffenen zylindrischen Bohrungen elastische Körper 4 eingesetzt, die über diese Seitenfläche etwas überstehen und nach Einsetzen der Führungsleisten 1 klemmend gegen diese anliegen.

## Patentansprüche

1. Reibahle mit am Umfang des Messerkopfes (3) lösbar angeordneten, im wesentlichen parallel zur Messerkopfachse in prismatischen Aussparungen (2) sich erstreckenden Führungsleisten, dadurch gekennzeichnet, daß die Führungsleisten (1) selbsthemmend in den Aussparungen (2) (3) angeordnet sind wozu mindestens in die in Drehrichtung vordere Seitenfläche der Aussparung (2) elastische, über die Seitenfläche überstehende Körper (4) eingesetzt sind.

2. Reibahle nach Anspruch 1, dadurch gekennzeichnet, daß die Aussparungen (2) ein Schwalbenschwanzprofil aufweisen.

3. Reibahle nach den Ansprüchen 1 und 2, dadurch gekennzeichnet, daß die Seitenflächen (11) der ein im wesentlichen trapezförmiges Profil aufweisenden Führungsleisten (1) sich bis zu der zylindrisch gekrümmten Außenfläche (12) der Führungsleisten (1) erstrecken.

4. Reibahle nach den Ansprüchen 1 und 2, dadurch gekennzeichnet, daß die einen spitzen Winkel miteinander einschließenden Flanken (11) der Führungsleisten (1) stetig in die zylindrisch gekrümmte Außenfläche (12) der Führungsleisten (1) übergehen.

5. Reibahle nach Anspruch 1, dadurch gekennzeichnet, daß die elastischen Körper (4) in Radialebenen angeordnet sind.

## Claims

1. A reamer having guiding gibs which are detachably disposed at the circumference of the cutter head (3) and extend essentially parallel to the cutter head in vee'd recesses (2),

characterised in that the guiding gibs (1) are arranged to be self-retaining in the recesses (2), with flexible bodies (4) inserted for this purpose at least into the front side face of the recess (2), viewed in the direction of rotation, said bodies standing proud of the side face.

2. The reamer as claimed in Claim 1, characterised in that the recesses (2) exhibit a dovetailed profile.

3. The reamer as claimed in Claims 1 and 2, characterised in that the side faces (11) of the guiding gibs (1) exhibiting an essentially trapezoid profile extend to the cylindrically curved outer surface (12) of the guiding gibs (1).

4. The reamer as claimed in Claims 1 and 2, characterised in that the flanks (11) of the guiding gibs (1) which together enclose an acute angle graduate smoothly into the cylindrically curved outer surface (12) of the guiding gibs (1).

5. The reamer as claimed in Claim 1, characterised in that the flexible bodies (4) are arranged in radial planes.

## Revendications

1. Alésoir avec des pièces de guidage amovibles, disposées sur le pourtour de la tête (3) dans des évidemsnts prismatiques (2) et essentiellement parallèles à l'axe de la tête, caractérisé en ce que les pièces (1) ont un blocage automatique dans les évidements (2), des éléments élastiques (4) étant logés à cet effet dans la surface latérale au moins de l'évidement (2), antérieure dans le sens de rotation et dont ils dépassent.

2. Alésoir suivant la revendication 1, caractérisé par un profil en queue d'aronde des évidements (2).

3. Alésoir suivant les revendications 1 et 2, caractérisé en ce que les surfaces latérales (11) des pièces de guidage (1), dotées d'un profil essentiellement trapézoidal, se prolongent jusqu'à la surface externe cintrée (12) de ces pièces (1).

4. Alésoir suivant les revendications 1 et 2, caractérisé en ce que les flancs (11) des pièces de guidage (1), qui forment entre eux un angle aigu, sont prolongés par la surface externe cintrée (12) de ces pièces (1).

5. Alésoir suivant la revendication 1, caractérisé en ce que les éléments élastiques (4) se situent dans des plans radiaux.

Fig. 1

0 120 226

Fig. 2

Fig. 3